# EUROPÄISCHE PATENTSCHRIFT

(11) **EP 3 015 367 B1**
(45) Veröffentlichungstag und Bekanntmachung des Hinweises auf die Patenterteilung: **12.04.2017**
(21) Anmeldenummer: 15002961.9
(22) Anmeldetag: 17.10.2015
(51) Int. Cl.: B64D 11/02, E03D 11/08

(54) **ENTSORGUNGSVORRICHTUNG FÜR EIN FLUGZEUG SOWIE FLUGZEUG MIT DER ENTSORGUNGSVORRICHTUNG**
DISPOSAL DEVICE FOR AN AIRCRAFT AND AIRCRAFT HAVING THE DISPOSAL DEVICE
DISPOSITIF D'EVACUATION POUR UN AVION ET AVION DOTE D'UN DISPOSITIF D'EVACUATION

(30) Priorität: 28.10.2014 DE 102014015991
(43) Veröffentlichungstag der Anmeldung: 04.05.2016
(73) Patentinhaber: Apparatebau Gauting GmbH, 82205 Gilching (DE)
(72) Erfinder: Laßmann, Holger, DE - 09627 Naundorf (DE); Scharschmied, Jürgen, DE - 82061 Neuried (DE)
(74) Vertreter: Diehl Patentabteilung

(56) Entgegenhaltungen:
- DE-U1- 9 412 090
- US-A- 5 421 040
- US-A1- 2008 237 397

## Beschreibung

Die Erfindung betrifft Entsorgungsvorrichtung für ein Flugzeug mit einem Becken zur Aufnahme von flüssigen und/oder festen Schmutzstoffen, mit einem Deckel zum Verschließen des Beckens, mit einer Zuführanordnung zur Zuführung eines Luft-Wasser-Gemisches, wobei die Zuführanordnung eine Luft-Wasser-Mischeinrichtung zur Bereitstellung des Luft-Wasser-Gemisches sowie eine Verteileinrichtung zur Verteilung des Luft-Wasser-Gemisches in dem Becken aufweist, mit einer Abführanordnung zum Abführen des aus dem Luft-Wasser-Gemisch mit den Schmutzstoffen gebildeten Abwasser, wobei die Abführanordnung in einem Auslass von dem Becken mündet und die Abführanordnung mit einem Unterdruck beaufschlagbar ist, so dass das Luft-Wasser-Gemisch bei geschlossenem Deckel über die Verteileinrichtung in das Becken eingesaugt wird. Ferner betrifft die Erfindung ein Flugzeug mit dieser Entsorgungsvorrichtung.

In Flugzeugen fallen im Passagierbereich unterschiedliche Arten von Abfällen oder Schmutzstoffen an. Ein unentbehrlicher Bestandteil bei Flugzeugen mit Passagieren ist z.B. die Flugzeugtoilette und die damit eng verbundene Frage der Entsorgung der Fäkalien. Sicherlich wäre es möglich, eine Flugzeugtoilette analog zu einer konventionellen Toilette auszubilden, hierbei wäre jedoch der Wasserbedarf für einem Spülvorgang ebenfalls mit dem Wasserbedarf einer konventionellen Toilette vergleichbar. Bei Flugzeuganwendungen ist jedoch konsequent auf Gewichtseinsparung zu setzen, um nicht zuletzt die Zuladung des Flugzeugs unnötig zu verringern oder den Treibstoffbedarf des Flugzeugs unnötig zu erhöhen. Ferner müssten die von einer konventionellen Toilette benötigten bzw. erzeugten größeren Mengen an Frischwasser und Grauwasser bei einem Stopp des Flugzeugs an einem Flughafen aufwändig getauscht werden. Aus diesem Grund wurden bereits Vakuumtoiletten vorgeschlagen, wobei Fäkalien über ein sogenanntes Vakuumsystem aus der WC-Schüssel in einen Sammelbehälter abgezogen werden, wobei sich derartige Vakuumsysteme durch den geringeren Wasserbedarf auszeichnen.

Eine derartige Vakuumtoilette wird beispielsweise in der Druckschrift DE 10 2005 054 887 A1 offenbart. Bei dieser Druckschrift wird als Problem erkannt, dass das Spülwasser beispielsweise mittels einer zusätzlichen Pumpe mit Druck beaufschlagt werden muss, bevor es dem WC zugeführt wird. Als Lösung wird vorgeschlagen, dass eine WC-Schüssel mit einer Vakuumabwasserleitung über ein Spülventil mit einem Vakuumsystem verbindbar ist und eine in der WC-Schüssel angeordnete Sprühvorrichtung, die über eine Venturidüse mit dem Spülwasservorratsbehälter in Verbindung steht, vorgesehen ist. Wenn das Spülventil geöffnet wird, wird in der Vakuumabwasserleitung ein Unterdruck erzeugt. Aufgrund einer Druckdifferenz zwischen Vakuum und Kabinenluft wird ein Luftstrom erzeugt, durch den mittels des Venturieffekts in dem Spülwasservorratsbehälter enthaltenes Spülwasser angesaugt, über die Sprühvorrichtung in die WC-Schüssel gesprüht und in die Vakuumwasserleitung gesaugt wird.

Eine weitere Vakuumtoilette ist aus der US 5,421,040 A bekannt. Hier erfolgt eine Mischung von Wasser und Luft in dem Becken der Toilette, so dass mit dem Luft-Wasser-Gemisch eine Reinigung des Beckens durchgeführt wird.

Der Erfindung liegt die Aufgabe zugrunde, eine verbesserte Entsorgungsvorrichtung für ein Flugzeug vorzuschlagen. Diese Aufgabe wird durch eine Entsorgungsvorrichtung mit den Merkmalen des Anspruchs 1 sowie durch ein Flugzeug mit den Merkmalen des Anspruchs 13 gelöst. Bevorzugte oder vorteilhafte Ausführungsformen der Erfindung ergeben sich aus den Unteransprüchen, der nachfolgenden Beschreibung sowie den beigefügten Figuren.

Somit wird im Rahmen der Erfindung eine Entsorgungsvorrichtung vorgeschlagen, welche für ein Flugzeug geeignet und/oder ausgebildet ist. Prinzipiell ist es zwar möglich, dass die Entsorgungsvorrichtung auch bei anderen Mobilen eingesetzt wird, aufgrund der Umgebungsbedingungen im Betrieb eines Flugzeugs kann die Entsorgungsvorrichtung jedoch besonders vorteilhaft bei diesem eingesetzt werden. Dies liegt insbesondere daran, dass im Flugbetrieb des Flugzeugs in größerer Höhe ein Druckunterschied zwischen der Umgebung und dem Kabineninnenraum des Flugzeugs vorliegt, der von der Entsorgungsvorrichtung im Spülbetrieb genutzt werden kann.

Die Entsorgungsvorrichtung umfasst ein Becken, welches zur Aufnahme von flüssigen und/oder festen Schmutzstoffen geeignet und/oder ausgebildet ist. Das Becken kann in der Draufsicht z.B. einen kreisrunden, ovalen, rechteckigen oder quadratischen Öffnungsquerschnitt aufweisen. Auch ein Becken mit Freiformkontur ist im Rahmen der Erfindung denkbar. Bei dem flüssigen und/oder festen Schmutzstoffen kann es sich um Fäkalien, bei alternativen Ausgestaltungen jedoch auch um Essensreste, Spülwasser und andere Schmutzstoffe handeln.

Die Entsorgungsvorrichtung weist einen Deckel auf, welcher zum Verschließen des Beckens, insbesondere einer Öffnung des Beckens, dient. Der Deckel ist bevorzugt als ein Klappdeckel ausgebildet, sodass dieser einen geöffneten Zustand und einen geschlossenen Zustand einnehmen kann. In dem geschlossenen Zustand liegt der Deckel auf dem Becken vollflächig auf.

Die Entsorgungsvorrichtung weist eine Zuführanordnung auf, wobei die Zuführanordnung eine Luft-Wasser-Mischeinrichtung sowie eine Verteileinrichtung umfasst. Die Luft-Wasser-Mischeinrichtung dient zur Bereitstellung eines Luft-Wasser-Gemisches. Die Verteileinrichtung ist zur Verteilung des Luft-Wasser-Gemisches in dem Becken ausgebildet. Insbesondere bildet die Verteileinrichtung einen Einlass der Zuführanordnung in dem Becken. Die Luft-Wasser-Mischeinrichtung ist insbesondere in einer Zuführung der Zuführanordnung zu dem Einlass angeordnet.

Ferner weist die Entsorgungsvorrichtung eine Abführanordnung auf, welche zum Abführen des aus dem Luft-Wasser-Gemischs sowie den optionalen Schmutzstoffen gebildeten Abwassers ausgebildet ist. Das Abwasser kann ausschließlich fest und/oder flüssig sein, es kann jedoch auch als ein Luft-Abwasser-Gemisch ausgebildet sein. Die Abführanordnung ist mit einem Auslass des Beckens strömungstechnisch verbunden und ist mit einem Unterdruck beaufschlagbar. Insbesondere ist die Abführanordnung mit einem Unterdrucksystem oder einem Unterdruckbereich strömungstechnisch verbindbar und/oder verbunden. Funktional betrachtet ist vorgesehen, dass bei einer Beaufschlagung der Abführanordnung mit dem Unterdruck und bei einem geschlossenen Deckel das Luft-Wasser-Gemisch über die Verteileinrichtung in das Becken eingesaugt wird und nachfolgend über den Auslass aus dem Becken ausgesaugt wird. Dazwischen dient das Luft-Wasser-Gemisch zum Spülen des Beckens.

Die Luft-Wasser-Mischeinrichtung weist einen Luftführungskanal, insbesondere ein Luftführungsrohr auf, wobei in dem Luftführungskanal eine Düse zur Ausgabe von Wasser angeordnet ist. Es ist vorgesehen, dass das über die Düse ausgegebene Wasser mit der Luft in dem Luftführungskanal vermischt wird, so dass das Luft-Wasser-Gemisch gebildet wird. Die Düse kann in der allgemeinsten Ausprägung der Erfindung mit einer beliebigen Position und Ausrichtung angeordnet sein, wobei der Öffnungsquerschnitt der Düse eine beliebige Größe oder Form einnehmen kann.

Im Rahmen der Erfindung wird vorgeschlagen, dass das Wasser mit einem Überdruck beaufschlagbar ist, insbesondere derart, dass in der Zuleitung der Düse ein Überdruck gebildet ist. Der Überdruck und/oder Unterdruck ist dabei relativ zu einem Umgebungsdruck der Entsorgungsvorrichtung in dem Flugzeug, insbesondere relativ zu einem Kabineninnendruck zu betrachten. Der Vorteil der Erfindung ist darin zusehen, dass durch die Druckbeaufschlagung des Wassers der Druckunterschied zwischen der in dem Luftführungskanal geführten Luft und dem zugeführten Wasser sehr weit gespreizt ist. Dadurch wird erreicht, dass die Vermischung der Luft und des Wassers verbessert ist und eine verbesserte Reinigungswirkung in dem Becken erzielen kann. Besonders bevorzugt beträgt der Überdruck in der Zuleitung mindestens 2 bar, vorzugsweise mindestens 3 bar.

Gemäß der Erfindung sind die Verteileinrichtung und das Becken gemeinsam so ausgelegt, dass das Wasser-Luft-Gemisch in einem Zyklon und/oder in einem Schraubenwirbel von der Verteileinrichtung in den Auslass geführt wird. Somit ergeben sich im Betrieb Trajektorien des Wasser-Luft-Gemisches, welche sich an den Wänden des Beckens schraubenartig oder spiralförmig von dem Einlass zu dem Auslass erstrecken. Durch die besondere Führung des Wasser-Luft-Gemisches wird der Weg des Wasser-Luft-Gemisches in dem Becken und insbesondere an den Wänden des Beckens künstlich verlängert, sodass die Reinigungswirkung bezogen auf ein Volumen des Wasser-Luft-Gemisches besonders hoch ist. Es kann dabei auch vorgesehen sein, dass das Wasser-Luft-Gemisch auf dem Weg zwischen Einlass und Auslass sich zu einem Abwassergemisch wandelt.

Bei einer bevorzugten Weiterbildung der Erfindung weist die Entsorgungsvorrichtung eine Wasserversorgung zur Versorgung der Düse mit dem Wasser auf, wobei die Wasserversorgung das Wasser mit dem Überdruck beaufschlagt. Es kann vorgesehen sein, dass die Wasserversorgung als eine separate, der Entsorgungsvorrichtung zugeordnete Baugruppe ausgebildet ist. Vorzugsweise ist die Wasserversorgung als die Flugzeugwasserversorgung ausgebildet, welche in einem Wasserversorgungsbordnetz das Wasser für mehrere Verbraucher bereitstellt.

Bei einer bevorzugten Ausgestaltung der Erfindung ist die Düse zentral oder mittig angeordnet ist. Somit unterscheidet sich die erfindungsgemäße Ausgestaltung der Entsorgungsvorrichtung von dem Stand der Technik insbesondere dadurch, dass bislang nur sogenannte Venturidüsen zur Bereitstellung eines Luft-Wasser-Gemisches verwendet wurden. Dagegen ist es bei der Erfindung vorgesehen, dass die zentral angeordnete Düse für die Ausgabe von Wasser in dem Luftführungskanal für diese Funktion eingesetzt wird.

Insbesondere ist die Luft-Wasser-Mischeinrichtung als eine Strahlpumpeneinrichtung ausgebildet, wobei an dem Wasser der Überdrück und an dem Eingang des Luftführungskanals ein Raumumgebungsdruck, insbesondere ein Innenkabinendruck des Flugzeugs, und an dem Ausgang der Abführanordnung ein gegenüber dem Raumumgebungsdruck verminderter Unterdruck anliegt. Somit wird über das Druckgefälle zwischen dem Ausgang und dem Eingang ein Luftstrom erzeugt, wobei der im Bereich der Düse herrschende Luftdruck gegenüber dem an dem Austritt der Düse für das Wasser anliegenden Überdruck vermindert ist. Auf diese Weise wird aufgrund des Druckunterschieds Wasser aus der Düse herausgesaugt beziehungsweise aufgrund des gegenüber Überdrucks aus der Düse herausgedrückt. Durch die Strahlpumpentechnik wird ein sehr gut verwendbares Luft-Wasser-Gemisch erzeugt, welches bei Feldversuchen sehr gute Reinigungseffekte in dem Becken bei geringem Wasserbedarf gezeigt hat.

Insbesondere ist das Luft-Wasser-Gemisch als ein Aerosol ausgebildet.

Der Vorteil der Erfindung ist somit darin zu sehen, dass durch den Aufbau der Luft-Wasser-Mischeinrichtung eine verbesserte Art der Bereitstellung der Luft-Wasser-Mischeinrichtung erreicht wird. Dabei ist die erfindungsgemäße Ausgestaltung einfach und kostengünstig umzusetzen und zu integrieren.

Bei einer bevorzugten Ausgestaltung der Erfindung ist eine Düsenstrahlrichtung der Düse gleichgerichtet und/oder parallel zu der Längserstreckung des Luftführungskanals und/oder zu einem Luftstrom in dem Luftführungskanal ausgerichtet. Insbesondere ist die Düsenstrahlrichtung in Richtung des Einlasses, in Querrichtung oder in Gegenrichtung zu dem Einlass des Beckens gerichtet. Bei der zuletzt genannten Möglichkeit wird die Durchmischung verbessert.

Es ist dabei besonders bevorzugt vorgesehen, dass der Luftführungskanal eine Querschnittsfläche, insbesondere eine freie Querschnittsfläche, im Bereich oder in einer Ebene senkrecht zu dem Luftstrom und/oder senkrecht zur Längserstreckung des Luftführungskanals und zugleich in der Höhe der Austrittsöffnung der Düse von mindestens 3 Quadratzentimetern, vorzugsweise von mindestens 6 Quadratzentimetern, und im Speziellen genau oder mindestens 12 Quadratzentimeter aufweist. Durch die vergleichsweise große Querschnittsfläche wird erreicht, dass eine Verstopfung der Zuführanordnung, insbesondere des Luftführungskanals, durch einen nicht gewollten Rückstau oder andere Störungen des Betriebs nahezu unmöglich gemacht wird. Damit ist die erfindungsgemäße Entsorgungsvorrichtung wenig störanfällig und sehr betriebssicher.

Um eine Trennung von Luft und Wasser in dem Luft-Wasser-Gemisch zu vermeiden ist vorzugsweise vorgesehen, dass ein Strömungsweg ausgehend von dem Luftführungskanal nach der Düse oder ein Strömungsweg ab der Düse bis in das Becken einen freien Querschnitt größer als 3 Quadratzentimeter, vorzugsweise größer als 4 Quadratzentimeter aufweist. Insbesondere wird auf eine Spritzdüse im Einlassbereich des Beckens verzichtet, da die Reinigungswirkung durch das Luft-Wasser-Gemisch, insbesondere das Aerosol, und nicht durch eine durchschnittsverjüngte Spritzdüse umgesetzt werden soll.

Bei einer bevorzugten Weiterbildung der Erfindung ist die Düse als eine Vollkegeldüse, insbesondere als eine Vollkreisdüse ausgebildet. Diese Bauform von Düsen weist ein kegelförmiges Spritzbild mit kreisförmiger Aufprallfläche auf. Die Vollkegeldüse kann dabei als eine Tangentialvollkegeldüse, insbesondere mit einem Wirbelraum, oder als eine Axialvollkegeldüse, insbesondere mit einem Drallmischraum, oder als eine Bündeldüse mit mehreren versetzt zueinander angeordneten Einzeldüsen ausgebildet sein. Es ist auch möglich, dass die Düse so realisiert ist, dass das daraus resultierende Spritzbild eine Spirale bildet, sodass bereits eine Rotation der Wasserpartikel um eine Achse, welche durch den Luftstrom in dem Luftführungskanal beziehungsweise durch die Längserstreckung des Luftführungskanals gebildet ist, erreicht wird.

Ergänzend ist es bevorzugt, dass auch der Querschnitt oder die Querschnittsfläche des Luftführungskanals kreisförmig oder rechteckig angeordnet ist, wobei die Vollkegeldüse derart zentral oder mittig angeordnet ist, dass das Spritzbild der Düse koaxial und/oder konzentrisch und/oder mittig zu der Querschnittsfläche des Luftführungskanals angeordnet ist. Durch diese spezifische Anordnung wird erreicht, dass die komplette Querschnittsfläche des Luftführungskanals gleichmäßig mit Wasser aus der Vollkegeldüse versorgt wird und dadurch besonders effektiv das Wasser-Luft-Gemisch bereitgestellt werden kann.

Bei einer vorteilhaften Realisierung der Erfindung ist eine Einstrahlrichtung des Luft-Wasser-Gemisches in das Becken tangential zu einer Hochachse des Beckens und/oder eine Absaugrichtung des Auslasses tangential zu der Hochachse des Beckens orientiert ist. Konstruktiv kann dies durch eine tangentiale Ausrichtung der Einstrahlöffnung und/oder des Auslasses realisiert werden. Die Hochachse als gedankliche Hilfskonstruktion ist insbesondere lotrecht ausgerichtet und zentral und/oder mittig in dem Becken angeordnet. Durch diese konstruktive Ausgestaltung wird die Entstehung des Zyklons und/oder des Schraubenwirbels umgesetzt oder gefördert.

Bei einer bevorzugten Ausgestaltung der Erfindung ist die Verteileinrichtung als eine oder mehrere Einstrahlöffnungen ausgebildet, wobei die Einstrahlrichtung der Einstrahlöffnungen derart orientiert ist, dass der Zyklon beziehungsweise der Schraubenwirbel erzeugt oder zumindest unterstützt wird. Beispielsweise ist die Einstrahlrichtung der Einstrahlöffnungen nicht rein vertikal, sondern in einem zwischen vertikal und der horizontal liegenden Zwischenwinkel ausgerichtet. Beispielsweise ist der Zwischenwinkel bezogen auf die Horizontale kleiner als 45 Grad, vorzugsweise kleiner als 30 Grad gewählt, um den Zyklon und/oder Schraubenwirbel zu erzeugen.

Bei einer bevorzugten konstruktiven Realisierung der Erfindung ist der Deckel und/oder die Auflagefläche des Beckens für den Deckel derart ausgebildet, dass ein unterdruckdichter und/oder vakuumdichter Abschluss gebildet ist. Insbesondere weisen Deckel und Becken eine Anlagefläche beziehungsweise eine Auflagefläche auf, welche gemeinsam einen luftdichten Abschluss bilden. Insbesondere ist die Entsorgungsvorrichtung so ausgelegt, dass bei einer Beaufschlagung der Abführanordnung mit dem Unterdruck der Deckel an das Becken herangezogen wird. Durch den luftdichten und/oder unterdruckfesten Abschluss wird erreicht, dass der anliegende Unterdruck für die Bereitstellung und Führung des Luft-Wasser-Gemisches genutzt werden kann.

Konstruktiv betrachtet ist es bevorzugt, dass die Abführanordnung eine Abführleitung und ein Unterdruckventil aufweist, wobei die Abführleitung strömungstechnisch mit dem Unterdruckbereich verbindbar und/oder verbunden ist und wobei das Unterdruckventil als ein Sperrventil ausgebildet ist und die Abführleitung öffnen und schließen kann.

Es ist auch bevorzugt, dass die Zuführanordnung ein Wasserventil und eine Zuführleitung aufweist, wobei die Wasserversorgung über die Zuführleitung strömungstechnisch mit der Düse verbunden ist und wobei das Wasserventil als ein Sperrventil ausgebildet ist, welches die Zuführleitung von der Wasserversorgung zu der Düse öffnen und schließen kann. Beispielsweise ist das Unterdruckventil und/oder das Wasserventil als ein Magnetventil ausgebildet.

In einer Weiterbildung der Erfindung weist die Entsorgungsvorrichtung eine Steuereinrichtung auf, welche ausgebildet ist, mindestens eines der Ventile, vorzugsweise beide Ventile, bei einem Spülvorgang anzusteuern. Insbesondere ist die Steuereinrichtung programmtechnisch und/oder schaltungstechnisch ausgebildet, bei dem Spülvorgang der Entsorgungsvorrichtung zum einen das Unterdruckventil zu öffnen, um die Abführanordnung mit dem Unterdruck zu beaufschlagen, und zum anderen das Wasserventil zu öffnen, sodass Wasser mit Überdruck zur Bereitstellung des Luft-Wasser-Gemisches eingespritzt werden kann. Bei einer bevorzugten Ausgestaltung der Erfindung weist die Entsorgungsvorrichtung eine Betätigungseinrichtung auf, welche beispielsweise als ein Schalter oder Taster ausgebildet ist, wobei die Betätigungseinrichtung die Steuereinrichtung für den Spülvorgang aktiviert, sodass diese den Spülvorgang und insbesondere die Ansteuerung des oder der Ventile umsetzen kann.

Bei einer bevorzugten Realisierung der Erfindung ist das Becken als eine Toilettenschüssel und/oder die Entsorgungsvorrichtung als eine Vakuumtoilette ausgebildet.

Bei einer alternativen Ausgestaltung der Erfindung ist das Becken als eine Spüle, insbesondere als eine Küchenspüle, und/oder die Entsorgungsvorrichtung als eine Spüleneinrichtung - auch Galley Waste Disposal Unit (GWDU) genannt - ausgebildet. Es hat sich nämlich herausgestellt, dass gerade diese Entsorgungstechnologie besonders gut bei Spülen, insbesondere Küchenspülen, zum Ausspülen von Küchenabfällen eingesetzt werden kann.

Ein weiterer Gegenstand der Erfindung bildet ein Flugzeug mit der Entsorgungsvorrichtung wie diese zuvor beschrieben wurde beziehungsweise nach einem der vorhergehenden Ansprüche. Die Entsorgungsvorrichtung ist besonders bevorzugt als die Spüleneinrichtung oder als die Vakuumtoilette ausgebildet. Bei diesem Gegenstand der Erfindung ist es besonders bevorzugt, dass der Unterdruckbereich als ein künstlicher Unterdruck, zum Beispiel aus einer Vakuumpumpe, ausgebildet ist oder durch den Außenbereich des Flugzeugs in großer Flughöhe gebildet ist. In größerer Flughöhe unterscheidet sich nämlich der Raumumgebungsdruck innerhalb des Flugzeugs, insbesondere innerhalb des Passagier- und/oder Kabinenbereichs des Flugzeugs, von dem Außenbereich des Flugzeugs um mehr als 300 Millibar, insbesondere mehr als 500 Millibar. Vorzugsweise ist die Wasserversorgung als die Flugzeugwasserversorgung ausgebildet, welche in einem Wasserversorgungsbordnetz das Wasser für mehrere Verbraucher bereitstellt. Bei einem Überdruck von mindestens 2 bis 3 bar ergibt sich somit ein Druckunterschied zwischen Luft und Wasser von mindestens 2 bar bis 3,5 bar.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:
- Figur 1: eine schematische dreidimensionale Darstellung einer Entsorgungsvorrichtung ausgebildet als eine Küchenspüle als ein erstes Ausführungsbeispiel der Erfindung;
- Figur 2: einen schematischen Querschnitt durch eine oder die Entsorgungsvorrichtung;
- Figur 3a, b: einen schematischen Längsschnitt beziehungsweise Querschnitt durch die Zuführanordnung für die Entsorgungsvorrichtung nach einer der vorhergehenden Figuren;
- Figur 4a,b: eine schematische Darstellung des Beckens der Entsorgungsvorrichtung zur Illustration des strömungstechnischen Verhaltens..

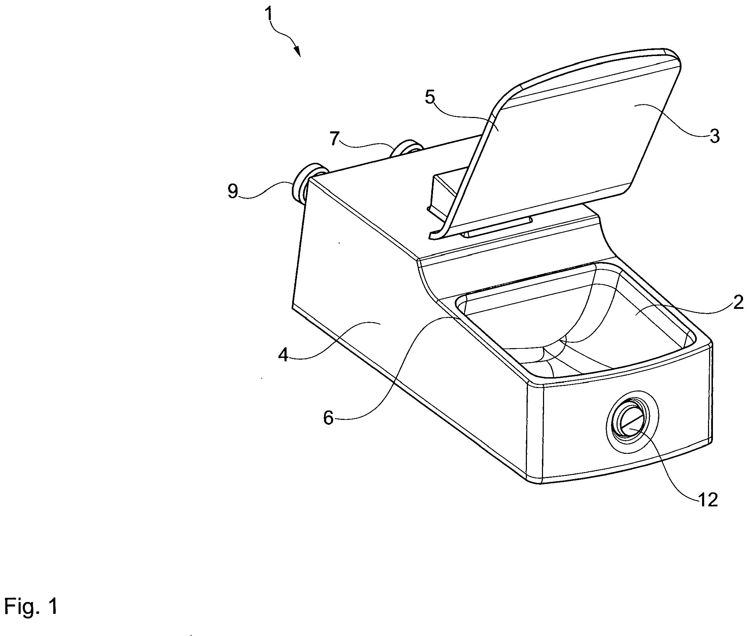

Die Figur 1 zeigt in einer schematischen dreidimensionalen Darstellung eine Entsorgungsvorrichtung 1, welche als eine Küchenspüle oder als eine GWDU Galley Waste Disposal Unit ausgebildet ist, als ein Ausführungsbeispiel der Erfindung.

Die Entsorgungsvorrichtung 1 umfasst ein Becken 2, welches in dem Ausführungsbeispiel als die eigentliche Spüle realisiert ist. Das Becken 2 hat in einer schematischen Draufsicht von oben eine rechteckige Grundfläche. Die Entsorgungsvorrichtung 1 weist ferner einen Deckel 3 auf, welcher klappbar an einem Grundkörper 4 der Entsorgungsvorrichtung 1 angeordnet ist. In dem gezeigten Zustand ist der Deckel 3 geöffnet. Für einen Spülvorgang kann der Deckel 3 geschlossen werden, wobei der Deckel 3 mit umlaufenden Anlageflächen 5 auf umlaufenden Anlageflächen 6 des Beckens 2 oder des Grundkörpers 4 dichtend aufliegt.

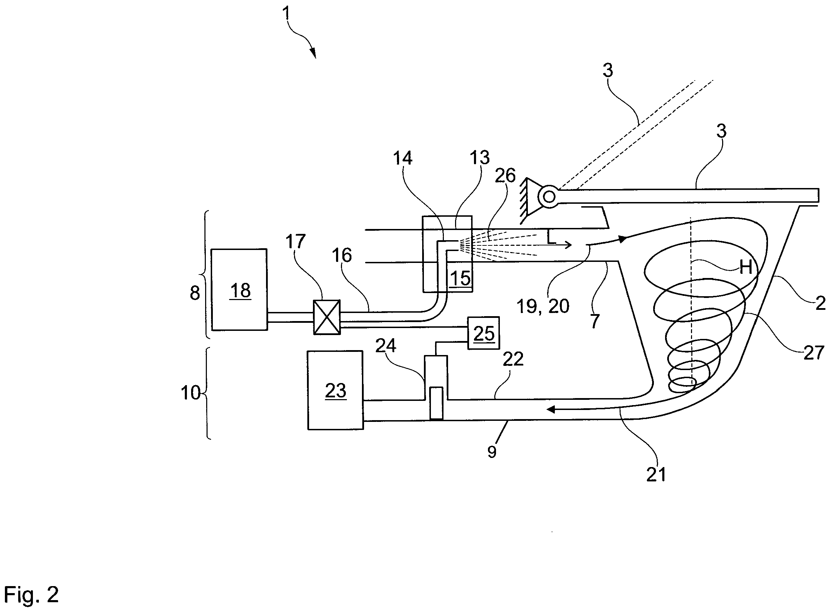

Die Entsorgungsvorrichtung 1 weist einen ersten Anschluss 7 zum Anschluss einer Zuführanordnung 8 (Figur 2) sowie einen zweiten Anschluss 9 zum Anschluss einer Abführanordnung 10 (Figur 2) auf. Die Entsorgungsvorrichtung 1 ist in einem Flugzeug 11 angeordnet, welches nur als schematischer Block eingezeichnet ist. Auf der Frontseite der Entsorgungsvorrichtung 1 befindet sich eine Betätigungseinrichtung 12, welche als ein Knopf oder als ein Taster ausgebildet ist, wobei die Entsorgungsvorrichtung 1 bei Betätigung der Betätigungseinrichtung 12 einen Spülvorgang startet.

Zur Beschreibung des funktionalen Aufbaus der Entsorgungsvorrichtung 1 wird auf die Figur 2 verwiesen, welche einen schematischen Querschnitt der Entsorgungsvorrichtung 1 gemäß der Figur 1 beziehungsweise einer beliebigen anderen Entsorgungsvorrichtung 1, welche beispielsweise auch als eine Flugzeugvakuumtoilette ausgebildet sein kann, darstellt.

In der schematischen Darstellung ist von der Entsorgungsvorrichtung 1 wieder der Deckel 3 zu erkennen, wobei dieser zum einen gestrichelt im geöffneten Zustand und zum anderen mit durchgezogenen Linien im geschlossenen Zustand dargestellt ist, wobei dieser auf dem Becken 2 dichtend aufliegt.

Über den ersten Anschluss 7 ist die Zuführanordnung 8 und über den zweiten Anschluss 9 die Abführanordnung 10 angeordnet. Die Zuführanordnung 8 weist ein Luftführungsrohr als einen Luftführungskanal 13 auf, welches einen rechteckigen Querschnitt hat und welches auf den ersten Anschluss 7 aufgesetzt ist. Bei alternativen Ausgestaltungen der Erfindung kann das Luftführungsrohr auch in das Becken 2 eingesteckt sein oder mit diesem einstückig verbunden sein. Somit ist der erste Anschluss 7 nicht zwingend. Der Luftführungskanal 13 ist mit dem Innenraum des Flugzeugs 11 strömungstechnisch gekoppelt. In dem Luftführungskanal 13 ist eine Düse 14 angeordnet, wobei Luftführungskanal 13 und Düse 14 gemeinsam eine Luft-Wasser-Mischeinrichtung 15 bilden. Die Düse 14 ist über eine Zuführleitung 16 und unter Zwischenschaltung eines Wasserventils 17 mit einer Wasserversorgung 18 verbunden. Die Wasserversorgung 18 ist als eine Flugzeugwasserversorgung ausgebildet, welche in einem Wasserversorgungsbordnetz das Wasser für mehrere Verbraucher bereitstellt. Die Wasserversorgung 18 stellt das Wasser mit einem Überdruck von mindestens 2 bis 3 bar bereit, wobei der Überdruck gegenüber dem Kabineninnendruck gemessen ist. Die Zuführanordnung 8 beziehungsweise der Luftführungskanal 13 ist insbesondere über den ersten Anschluss 7 mit einer Verteileinrichtung 19 verbunden, wobei die Verteileinrichtung 19 einen Einlass 20 in das Becken 2 bildet. Die Verteileinrichtung 19 kann bei der einfachsten Ausgestaltung als eine Aussparung in dem Becken 2 ausgebildet sein.

Die Abführanordnung 10 ist insbesondere über den zweiten Anschluss 9 mit einem Auslass 21 des Beckens 2 verbunden. In diesem Beispiel liegt der Auslass 21 tiefer als der Einlass 20, wenn sich die Entsorgungsvorrichtung 1 in einer betriebsbereiten Lage befindet. Die Abführanordnung 10 umfasst eine Abführleitung 22, über die der Auslass 21 mit einem Unterdruckbereich 23 verbindbar ist. Der Unterdruckbereich 23 kann bei dem Flugzeug 11 beispielsweise ein Bereich sein, der strömungstechnisch mit einem Außenbereich des Flugzeugs 11 gekoppelt ist, da bei größeren Flughöhen der Außenluftdruck gegenüber dem Innenluftdruck des Flugzeugs 11 derart verringert ist, dass sich ein Unterdruck ergibt. Alternativ und gegebenenfalls umschaltbar wird der Unterdruck in dem Unterdruckbereich 23 durch eine Unterdruckpumpe oder eine Vakuumpumpe erzeugt. Die Abführanordnung 10 weist ferner ein Unterdruckventil 24 auf, wobei das Unterdruckventil 24 als ein Sperrventil zum Sperren und Öffnen der Abführleitung 22 ausgebildet ist.

Für einen Spülvorgang zum Ausspülen von flüssigen und/oder festen Schmutzstoffen in dem Becken 2 wird zunächst der Deckel 3 geschlossen und damit das Becken 2 an der Einfüllöffnung des Beckens 3 unterdruckfest, luftdicht oder dichtend geschlossen.

Die Entsorgungsvorrichtung 1 weist eine Steuereinrichtung 25 auf, welche zur Ansteuerung des Wasserventils 17 und des Unterdruckventils 24 ausgebildet ist. Durch Betätigung der Betätigungseinrichtung 12 oder durch einen anderen Trigger wird die Steuereinrichtung 25 aktiviert und steuert zeitgleich oder versetzt zueinander das Unterdruckventil 24 und das Wasserventil 17 an. Sowohl das Unterdruckventil 24 als auch das Wasserventil 17 werden geöffnet. Durch den an der Abführanordnung 10 anliegenden Unterdruck wird über den Auslass 21, den Einlass 20 und den Luftführungskanal 13 von der strömungstechnisch verbundenen Raumumgebung Luft eingesaugt und in eine Luftführungsrichtung L beschleunigt. Zugleich ist das Wasserventil 17 geöffnet, wobei das Wasser druckbeaufschlagt und somit mit Überdruck an der Düse 14 anliegt. Durch den anliegenden Unterdruck auch im Bereich der Luft-Wasser-Mischeinrichtung 15 wird erreicht, dass das Wasser aus der Düse 14 herausgesaugt und durch den anliegenden Überdruck an der Wasserversorgung 18 ergänzend herausgedrückt wird, sodass sich in einem strömungstechnisch nach der Luft-Wasser-Mischeinrichtung 15 angeordneten Mischbereich ein Luft-Wasser-Gemisch 26 ergibt. Dieses Luft-Wasser-Gemisch ist insbesondere als ein Aerosol ausgebildet.

Das Luft-Wasser-Gemisch 26 wird über den Einlass 20 in das Becken 2 gesaugt. Die Verteileinrichtung 19 und optional ergänzend die Form des Beckens 2 sind zueinander so abgestimmt, dass das Luft-Wasser-Gemisch 26 nicht auf kürzestem Weg zu dem Auslass 21 gesaugt wird, sondern über eine Zyklon- und/oder Schraubenbahn 27, welche sich um eine Hochachse H schraubt, zu dem Auslass 21 befördert wird. Durch die Schraubenbahn 27 wird eine sehr hohe Reinigungswirkung innerhalb des Beckens 2 bewirkt. Durch die Umsetzung des Wassers in ein Luft-Wasser-Gemisch 26 wird erreicht, dass auch sehr geringe Mengen Wasser zum Reinigen und Spülen des Beckens 2 ausreichend sind. Das gegebenenfalls mit Schmutzstoffen versetzte Luft-Wasser-Gemisch 26 beziehungsweise Wasser mit dem Schmutzstoff wird am Ende der Schraubenbahn 27 über den Auslass 21 an dem Unterdruckventil 24 vorbei in einen Sammelbehälter (nicht dargestellt) gesaugt.

Es ist zu unterstreichen, dass sofern der Unterdruckbereich 23 durch einen Außenbereich des Flugzeugs 11 gebildet wird, die Spülung des Beckens 2 der Entsorgungsvorrichtung 1 nahezu ohne den Einsatz von elektrischer Energie und zudem mit sehr geringen Mengen von Wasser erfolgen kann.

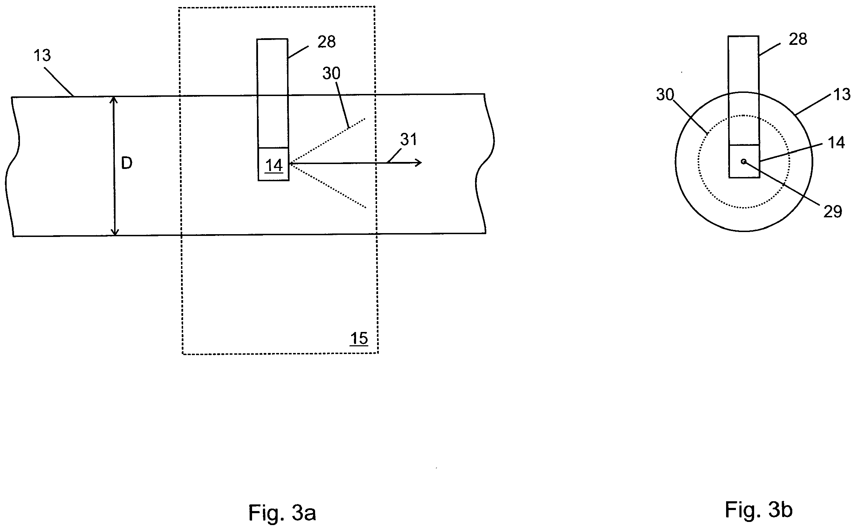

Die Figuren 3a, b zeigen eine schematische Darstellung der Luft-Wasser-Mischeinrichtung 15, wobei in der Figur 3a eine schematische Seitenansicht beziehungsweise ein Längsschnitt und in der Figur 3b eine axiale Draufsicht gezeigt ist. Es ist zu erkennen, dass die Düse 14 wahlweise von oben oder von unten über ein Trägerteil 28 mittig oder zentral in dem Luftführungskanal 13 angeordnet ist. In der Draufsicht ist sogar zu erkennen, dass ein Düsenausgang 29 der Düse 14 koaxial beziehungsweise konzentrisch zu dem Luftführungskanal 13 angeordnet ist.

Die Düse 14 ist als eine Vollkegeldüse ausgebildet, die das Wasser in einem kegelförmigen Spritzbild 30 mit einer Düsenstrahlrichtung 31, welche gleichgerichtet zu dem Luftstrom beziehungsweise zur Längserstreckung des Luftführungskanals 13 ausgibt. In der Figur 3b ist das kegelförmige Spritzbild 30 frontal von vorne gezeigt, wobei zu erkennen ist, dass dieses ebenfalls konzentrisch und koaxial zu dem Luftführungskanal 13 angeordnet ist. Es ist ferner zu unterstreichen, dass der Luftführungskanal 13 einen freien Durchmesser D von größer als 3 Zentimetern, vorzugsweise größer als 5 Zentimetern, aufweist, sodass eine großvolumige Vermischung zwischen Wasser und Luftstrom erfolgen kann.

Der Strömungsweg zwischen der Luft-Wasser-Mischeinrichtung 15 und dem Innenbereich des Beckens 2 weist durchgehend einen freien Querschnitt auf, der stets größer als 3 oder 4 Quadratzentimeter ausgebildet ist, so dass eine Trennung des Aerosols in die Bestandteile Luft und Wasser zwischen der Luft-Wasser-Mischeinrichtung 15 und dem Becken 2 vermieden wird. Das Aerosol hat gegenüber einem über Spritzdüsen eingespritztem Wasser eine andere und/oder bessere Reinigungswirkung.

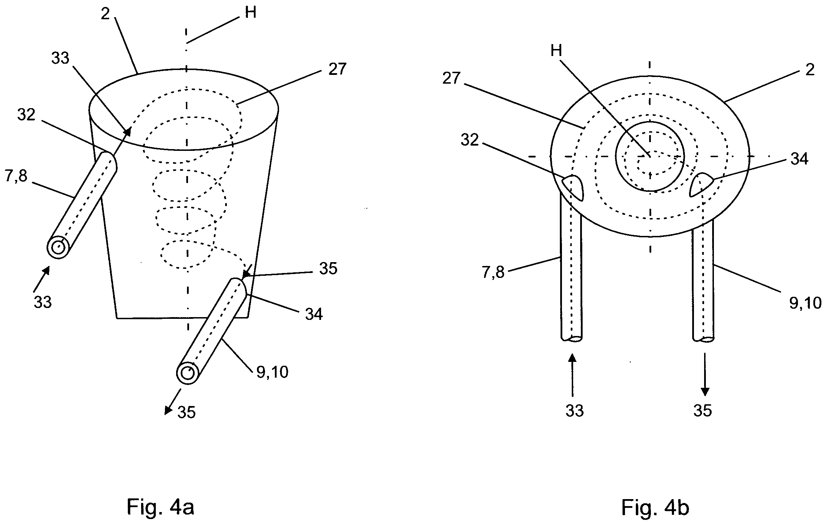

Die Figuren 4a,b zeigen eine schematische dreidimensionale Ansicht sowie eine Draufsicht auf das Becken 2 der Entsorgungsvorrichtung 1 zur Beschreibung der strömungstechnischen Funktion.

Das Becken 2 weist die Hochachse H auf, welche lotrecht angeordnet ist und sich mittig in dem Becken 2 befindet. Mit Bezug auf die Hochachse H ist der erste Anschluss 7 mit der Zuführanordnung 8 höher als der zweite Anschluss 9 mit der Abführanordnung 10 angeordnet. In dem Becken 2 bildet der erste Anschluss 7 eine Einstrahlöffnung 32 aus, die eine Einstrahlrichtung 33 des Luft-Wasser-Gemischs 26 konstruktiv vorgibt. Die Einstrahlrichtung 33 ist tangential zu der Hochachse H ausgerichtet, sodass die Einstrahlrichtung 33 den Beginn der Zyklon- und/oder Schraubenbahn 27 darstellt.

Durch den zweiten Anschluss 9 ist eine Auslassöffnung 34 festgelegt, welche konstruktiv eine Auslassrichtung 35 definiert. Die Auslassrichtung 35 ist tangential zu der Zyklon- und/oder Schraubenbahn 27 angeordnet, wobei die Einstrahlöffnung 32 einen Beginn der Zyklon- und/oder Schraubenbahn 27 und die Auslassöffnung 34 ein Ende der Zyklon- und/oder Schraubenbahn 27 definiert. Die Innenwandung des Beckens 2 ist so ausgebildet, dass sich die Zyklon- und/oder Schraubenbahn 27 entwickeln kann. Insbesondere ist die Innenwandung schalenförmig realisiert. Einstrahlrichtung 33 und Auslassrichtung 35 sind parallel, jedoch höhenversetzt zueinander angeordnet. In der Draufsicht gemäß Figur 4b ist zu erkennen, dass die Auslassöffnung 34 auf einem kleineren Radius im Vergleich zu der Einstrahlöffnung 32 sitzt. Die Einstrahlöffnung 32 ist größer als 3 oder 4 Quadratzentimeter ausgebildet.

### Bezugszeichenliste:

- 1: Entsorgungsvorrichtung
- 2: Becken
- 3: Deckel
- 4: Grundkörper
- 5: Anlageflächen
- 6: Anlageflächen
- 7: erster Anschluss
- 8: Zuführanordnung
- 9: zweiter Anschluss
- 10: Abführanordnung
- 11: Flugzeug
- 12: Betätigungseinrichtung
- 13: Luftführungskanal
- 14: Düse
- 15: Luft-Wasser-Mischeinrichtung
- 16: Zuführleitung
- 17: Wasserventil
- 18: Wasserversorgung
- 19: Verteileinrichtung
- 20: Einlass
- 21: Auslass
- 22: Abführleitung
- 23: Unterdruckbereich
- 24: Unterdruckventil
- 25: Steuereinrichtung
- 26: Luft-Wasser-Gemisch
- 27: Zyklon- und/oder Schraubenbahn
- 28: Trägerteil
- 29: Düsenausgang
- 30: kegelförmiges Spritzbild
- 31: Düsenstrahlrichtung
- 32: Einstrahlöffnung
- 33: Einstrahlrichtung
- 34: Auslassöffnung
- 35: Auslassrichtung
- D: freier Durchmesser
- H: Hochachse
- L: Luftführungsrichtung

## Patentansprüche

1. Entsorgungsvorrichtung (1) für ein Flugzeug (11)
mit einem Becken (2) zur Aufnahme von flüssigen und/oder festen Schmutzstoffen,
mit einem Deckel (3) zum Verschließen des Beckens (2),
mit einer Zuführanordnung (8) zur Zuführung eines Luft-Wasser-Gemisches (26), wobei die Zuführanordnung (8) eine Luft-Wasser-Mischeinrichtung (15) zur Bereitstellung des Luft-Wasser-Gemisches (26) sowie eine Verteileinrichtung (19,20) zur Verteilung des Luft-Wasser-Gemisches (26) in dem Becken (2) aufweist,
mit einer Abführanordnung (10) zum Abführen des aus dem Luft-Wasser-Gemisch (26) mit den Schmutzstoffen gebildeten Abwassers, wobei die Abführanordnung (10) in einem Auslass (21) von dem Becken (2) mündet und die Abführanordnung (10) mit einem Unterdruck beaufschlagbar ist, so dass das Luft-Wasser-Gemisch (26) bei geschlossenem Deckel (3) über die Verteileinrichtung (19,20) in das Becken (2) eingesaugt wird,
wobei die Luft-Wasser-Mischeinrichtung (15) einen Luftführungskanal (13) und eine Düse (14) zur Ausgabe von Wasser aufweist, und
das Wasser mit einem Überdruck beaufschlagbar ist, **dadurch gekennzeichnet, dass** die Verteileinrichtung (19,20) und das Becken (2) gemeinsam so ausgelegt sind, dass das Wasser-Luft-Gemisch (26) in einem Zyklon und/oder Schraubenbahn (27) von der Verteileinrichtung (19,20) in den Auslass (21) geführt wird.

2. Entsorgungsvorrichtung (1) nach Anspruch 1, **gekennzeichnet durch** ein Wasserversorgung (18), wobei die Wasserversorgung (18) mit der Düse (14) strömungstechnisch verbunden ist und das Wasser mit dem Überdruck bereitstellt.

3. Entsorgungsvorrichtung (1) nach Anspruch 1 oder 2, **dadurch gekennzeichnet, dass** die Düse (14) in dem Luftführungskanal (13) zentral oder mittig angeordnet ist.

4. Entsorgungsvorrichtung (1) nach einem der vorhergehenden Ansprüche, **dadurch gekennzeichnet, dass** der Luftführungskanal (13) eine Querschnittsfläche im Bereich eines Düsenausgangs (29) der Düse (14) von mindestens 3 Quadratzentimeter, vorzugsweise von mindestens 6 Quadratzentimeter aufweist.

5. Entsorgungsvorrichtung (1) nach einem der vorhergehenden Ansprüche, **dadurch gekennzeichnet, dass** ein Strömungsweg ausgehend von dem Luftführungskanal (13) nach der Düse (14) bis in das Becken (2) einen freien Querschnitt größer als 3 Quadratzentimeter, vorzugsweise größer als 4 Quadratzentimeter aufweist.

6. Entsorgungsvorrichtung (1) nach einem der vorhergehenden Ansprüche, **dadurch gekennzeichnet, dass** eine Einstrahlrichtung (33) des Luft-Wasser-Gemisches (26) in das Becken (2) tangential zu einer Hochachse (H) des Beckens (2) und/oder eine Auslassrichtung (35) des Auslasses (21) tangential zu der Hochachse (H) des Beckens (2) orientiert ist.

7. Entsorgungsvorrichtung (1) nach einem der vorhergehenden Ansprüche, **dadurch gekennzeichnet, dass** der Deckel (3) das Becken (2) luftdicht und/oder unterdruckfest abschließt.

8. Entsorgungsvorrichtung (1) nach einem der vorhergehenden Ansprüche, **dadurch gekennzeichnet, dass** die Abführanordnung (10) eine Abführleitung (22) und ein Unterdruckventil (24) aufweist, wobei die Abführleitung (22) strömungstechnisch mit einem Unterdruckbereich (23) verbindbar und/oder verbunden ist und wobei das Unterdruckventil (24) die Abführleitung (22) öffnen und schließen kann.

9. Entsorgungsvorrichtung (1) nach einem der vorhergehenden Ansprüche, **dadurch gekennzeichnet, dass** die Zuführanordnung (8) ein Wasserventil (17) und eine Zuführleitung (16) aufweist, wobei die Zuführleitung (16) die Wasserversorgung (18) über das Wasserventil (17) mit der Düse (14) verbindet, wobei das Wasserventil (17) die Zuführleitung (16) öffnen und schließen kann.

10. Entsorgungsvorrichtung (1) nach Anspruch 9 oder 10, **gekennzeichnet durch** eine Steuereinrichtung (25) sowie einen Betätigungseinrichtung (12), wobei die Steuereinrichtung (25) ausgebildet ist, nach einer Aktivierung **durch** die Betätigungseinrichtung (12) einen Spülvorgang zu starten, indem die Steuereinrichtung (25) das Unterdruckventil (24) und das Wasserventil (17) ansteuert.

11. Entsorgungsvorrichtung (1) nach einem der vorhergehenden Ansprüche, **dadurch gekennzeichnet, dass** das Becken (2) als eine Toilettenschüssel ausgebildet ist.

12. Entsorgungsvorrichtung (1) nach einem der vorhergehenden Ansprüche, **dadurch gekennzeichnet, dass** das Becken (2) als eine Spüle und/oder als ein Küchenabfallbecken ausgebildet ist.

13. Flugzeug (11) mit der Entsorgungsvorrichtung (1) nach einem der vorhergehenden Ansprüche.

## Claims

1. Waste-disposal unit (1) for an aircraft (11),
having a basin (2) for accommodating liquid and/or solid waste materials,
having a lid (3) for closing the basin (2),
having a feed arrangement (8) for feeding an air/water mixture (26), wherein the feed arrangement (8) has an air/water mixer (15) for supplying the air/water mixture (26) and also a distributing device (19, 20) for distributing the air/water mixture (26) in the basin (2),
having a removal arrangement (10) for removing the wastewater formed from the air/water mixture (26) containing the waste materials, wherein the removal arrangement (10) opens out in an outlet (21) of the basin (2) and the removal arrangement (10) can be subjected to a negative pressure so that, when the lid (3) is closed, the air/water mixture (26) is sucked into the basin (2) via the distributing device (19, 20),
wherein the air/water mixer (15) has an air-routing channel (13) and a nozzle (14) for discharging water, and the water can be subjected to an excess pressure,
**characterized in that** the distributing device (19, 20) and the basin (2) together are designed such that the water/air mixture (26) is routed in a cyclone and/or over a helical path (27) from the distributing device (19, 20) into the outlet (21).

2. Waste-disposal unit (1) according to Claim 1, **characterized by** a water supply (18), wherein the water supply (18) is flow-connected to the nozzle (14) and supplies the water with the excess pressure.

3. Waste-disposal unit (1) according to Claim 1 or 2, **characterized in that** the nozzle (14) is arranged in the centre or middle of the air-routing channel (13).

4. Waste-disposal unit (1) according to one of the preceding claims, **characterized in that** the air-routing channel (13) has a cross-sectional surface area of at least 3 square centimetres, preferably at least 6 square centimetres, in the region of an exit (29) of the nozzle (14).

5. Waste-disposal unit (1) according to one of the preceding claims, **characterized in that**, starting from the air-routing channel (13), a flow path downstream of the nozzle (14) into the basin (2) has a free cross section of greater than 3 square centimetres, preferably greater than 4 square centimetres.

6. Waste-disposal unit (1) according to one of the preceding claims, **characterized in that** a direction (33) in which the air/water mixture (26) is sprayed into the basin (2) is oriented tangentially to a vertical axis (H) of the basin (2) and/or an outlet direction (35) of the outlet (21) is oriented tangentially to the vertical axis (H) of the basin (2).

7. Waste-disposal unit (1) according to one of the preceding claims, **characterized in that** the lid (3) closes off the basin (2) in a manner which is air-tight and/or resistant to negative pressure.

8. Waste-disposal unit (1) according to one of the preceding claims, **characterized in that** the removal arrangement (10) has a removal line (22) and a negative-pressure valve (24), wherein the removal line (22) can be, and/or is, flow-connected to a negative-pressure region (23), and wherein the negative-pressure valve (24) can open and close the removal line (22).

9. Waste-disposal unit (1) according to one of the preceding claims, **characterized in that** the feed arrangement (8) has a water valve (17) and a feed line (16), wherein the feed line (16) connects the water supply (18) to the nozzle (14) via the water valve (17), and wherein the water valve (17) can open and close the feed line (16).

10. Waste-disposal unit (1) according to Claim 9 or 10, **characterized by** a control device (25) and an actuating device (12), wherein the control device (25) is designed so that, following activation by the actuating device (12), it starts a flushing operation, by way of it activating the negative-pressure valve (24) and the water valve (17).

11. Waste-disposal unit (1) according to one of the preceding claims, **characterized in that** the basin (2) is designed in the form of a toilet bowl.

12. Waste-disposal unit (1) according to one of the preceding claims, **characterized in that** the basin (2) is designed in the form of a sink and/or in the form of a galley waste disposal unit.

13. Aircraft (11) having the waste-disposal unit (1) according to one of the preceding claims.

## Revendications

1. Dispositif d'évacuation (1) pour un avion (11) avec une cuvette (2) destinée à recevoir des déchets liquides et/ou solides,
avec un couvercle (3) pour fermer la cuvette (2),
avec un dispositif d'arrivée (8) pour la fourniture d'un mélange air-eau (26), dans lequel le dispositif d'arrivée (8) présente un dispositif de mélange air-eau (15) pour la préparation du mélange air-eau (26) ainsi qu'un dispositif de répartition (19, 20) pour répartir le mélange air-eau (26) dans la cuvette (2),
avec un système d'évacuation (10) pour évacuer les eaux usées formées par le mélange air-eau (26) avec les déchets, dans lequel le système d'évacuation (10) débouche dans une sortie (21) de la cuvette (2) et le système d'évacuation (10) peut être soumis à une dépression, de telle manière que le mélange air-eau (26) soit aspiré dans la cuvette (2) via le dispositif de répartition (19, 20) lorsque le couvercle (3) est fermé,
dans lequel le dispositif de mélange air-eau (15) présente un canal d'amenée d'air (13) et une buse (14) pour la fourniture d'eau, et
l'eau peut être soumise à une surpression,
**caractérisé en ce que** le dispositif de répartition (19, 20) et la cuvette (2) sont conçus ensemble de telle manière que le mélange air-eau (26) soit guidé en un cyclone et/ou une trajectoire hélicoïdale (27) depuis le dispositif de répartition (19, 20) jusque dans la sortie (21).

2. Dispositif d'évacuation (1) selon la revendication 1, **caractérisé par** une alimentation en eau (18), dans lequel l'alimentation en eau (18) est raccordée en écoulement à la buse (14) et fournit l'eau avec la surpression.

3. Dispositif d'évacuation (1) selon la revendication 1 ou 2, **caractérisé en ce que** la buse (14) est disposée au centre ou au milieu dans le canal d'amenée d'air (13).

4. Dispositif d'évacuation (1) selon l'une quelconque des revendications précédentes, **caractérisé en ce que** le canal d'amenée d'air (13) présente, dans la région d'une sortie de buse (29) de la buse (4), une aire de section transversale d'au moins 3 centimètres carrés, de préférence d'au moins 6 centimètres carrés.

5. Dispositif d'évacuation (1) selon l'une quelconque des revendications précédentes, **caractérisé en ce qu'**un chemin d'écoulement partant du canal d'amenée d'air (13) vers la buse (14) jusque dans la cuvette (2) présente une section transversale libre supérieure à 3 centimètres carrés, de préférence supérieure à 4 centimètres carrés.

6. Dispositif d'évacuation (1) selon l'une quelconque des revendications précédentes, **caractérisé en ce qu'**une direction d'injection (33) du mélange air-eau (26) dans la cuvette (2) est orientée tangentiellement à un axe vertical (H) de la cuvette (2) et/ou une direction de sortie (35) de la sortie (21) est orientée tangentiellement à l'axe vertical (H) de la cuvette (2).

7. Dispositif d'évacuation (1) selon l'une quelconque des revendications précédentes, **caractérisé en ce que** le couvercle (3) ferme la cuvette (2) de façon étanche à l'air et/ou résistante à la dépression.

8. Dispositif d'évacuation (1) selon l'une quelconque des revendications précédentes, **caractérisé en ce que** le système d'évacuation (10) présente une conduite d'évacuation (22) et une soupape à dépression (24), dans lequel la conduite d'évacuation (22) peut être et/ou est raccordée en écoulement à une zone de dépression (23) et dans lequel la soupape à dépression (24) peut ouvrir ou fermer la conduite d'évacuation (22).

9. Dispositif d'évacuation (1) selon l'une quelconque des revendications précédentes, **caractérisé en ce que** le dispositif d'arrivée (8) présente une soupape à eau (17) et une conduite d'arrivée (16), dans lequel la conduite d'arrivée (16) relie l'alimentation en eau (18) à la buse (14) via la soupape à eau (17), dans lequel la soupape à eau (17) peut ouvrir et fermer la conduite d'arrivée (16).

10. Dispositif d'évacuation (1) selon la revendication 9 ou 10, **caractérisé par** un dispositif de commande (25) ainsi qu'un dispositif d'actionnement (12), dans lequel le dispositif de commande (25) est réalisé pour déclencher, après une activation par le dispositif d'actionnement (12), une opération de chasse d'eau, du fait que le dispositif de commande (25) commande la soupape à dépression (24) et la soupape à eau (17).

11. Dispositif d'évacuation (1) selon l'une quelconque des revendications précédentes, **caractérisé en ce que** la cuvette (2) est réalisée en tant que cuvette de W.C.

12. Dispositif d'évacuation (1) selon l'une quelconque des revendications précédentes, **caractérisé en ce que** la cuvette (2) est réalisée en tant qu'évier et/ou que cuvette pour déchets de cuisine.

13. Avion (11) avec le dispositif d'évacuation (1) selon l'une quelconque des revendications précédentes.
